# EUROPEAN PATENT APPLICATION

(11) **EP 1 544 242 A1**
(43) Date of publication of application: **22.06.2005**
(21) Application number: 04018248.7
(22) Date of filing: 02.08.2004
(51) Int. Cl.: C08L 13/00, C08L 15/00, C08L 23/28

(54) **Butyl compositions comprising nitrile polymers**

(30) Priority: 14.08.2003 CA 2437406
(71) Applicant: Bayer Inc., Sarnia, ON N7T 7M2 (CA)
(72) Inventor: von Hellens, Carl Walter, Bright's Grove Ontario N0N 1C0 (CA); Guo, Sharon X., Stratford Ontario N5A 6X9 (CA); Guérin, Frédéric, Port Arthur TX 77642 (US)
(74) Representative: Zobel, Manfred, Dr.

(57) **Abstract**

The present invention relates to a polymer composite comprising at least one carboxylated nitrile rubber polymer, that is optionally hydrogenated, and at least halogenated butyl rubber, a process for preparing said polymer composite wherein at least one carboxylated nitrile rubber polymer, that is optionally hydrogenated, and at least one halogenated butyl rubber are mixed and a shaped article comprising at least one carboxylated nitrile rubber polymer, that is optionally hydrogenated, and at least one halogenated butyl rubber, as well as a method of increasing the cross-linking density of a halogenated butyl rubber by admixing said halogenated butyl rubber with at least one, optionally hydrogenated, carboxylated nitrile rubber polymer, optionally at least on cross-linking agent, and optionally a filler and curing the compound.

## Description

### Field of the Invention.

The present invention relates to a polymer composite comprising at least one carboxylated nitrile rubber polymer, that is optionally hydrogenated, and at least halogenated butyl rubber, a process for preparing said polymer composite wherein at least one carboxylated nitrile rubber polymer, that is optionally hydrogenated, and at least one halogenated butyl rubber are mixed and a shaped article comprising at least one carboxylated nitrile rubber polymer, that is optionally hydrogenated, and at least one halogenated butyl rubber.

### Background of the Invention

The physical properties of a vulcanized rubber are greatly influenced by the cross-link density.

Hydrogenated nitrile rubber (HNBR), prepared by the selective hydrogenation of acrylonitrile-butadiene rubber (nitrile rubber; NBR, a copolymer comprising at least one conjugated diene, at least one unsaturated nitrile and optionally further comonomers), is a specialty rubber which has very good heat resistance, excellent ozone and chemical resistance, and excellent oil resistance. Coupled with the high level of mechanical properties of the rubber (in particular the high resistance to abrasion) it is not surprising that NBR and HNBR have found widespread use in the automotive (seals, hoses, bearing pads) oil (stators, well head seals, valve plates), electrical (cable sheating), mechanical engineering (wheels, rollers) and shipbuilding (pipe seals, couplings) industries, amongst others. Hydrogenated carboxylated nitrile rubber polymers (HXNBR) are known from WO-01/77185-A1.

Halogenated butyl rubbers are commercially available from Bayer Inc.

### Summary of the Invention

In one of it's aspects, the present invention relates to polymer composite comprising at least one, optionally hydrogenated, carboxylated nitrile rubber polymer, and at least halogenated butyl rubber. It is preferred that the optionally hydrogenated, carboxylated nitrile rubber polymer is a statistical copolymer. Further, it is preferred that the halogenated butyl rubber is a brominated butyl rubber or "bromobutyl" rubber. It is preferred that the carboxylated nitrile rubber polymer ("XNBR") is fully or partially hydrogenated ("HXNBR").

In another one of it's aspects, the present invention relates to a process for preparing said polymer composite comprising at least one, optionally hydrogenated, carboxylated nitrile rubber polymer, and at least halogenated butyl rubber wherein said at least one, optionally hydrogenated, carboxylated nitrile rubber polymer and at least halogenated butyl rubber are mixed.

In still another one of it's aspects, the present invention relates to a shaped article comprising at least one, optionally hydrogenated, carboxylated nitrile rubber polymer, and at least one halogenated butyl rubber.

In still another one of it's aspects, the present invention relates to a method of increasing the cross-linking density of a halogenated butyl rubber by admixing said halogenated butyl rubber with at least one, optionally hydrogenated, carboxylated nitrile rubber polymer, optionally at least on cross-linking agent, and optionally a filler and curing the compound.

### Brief Description of the Drawings

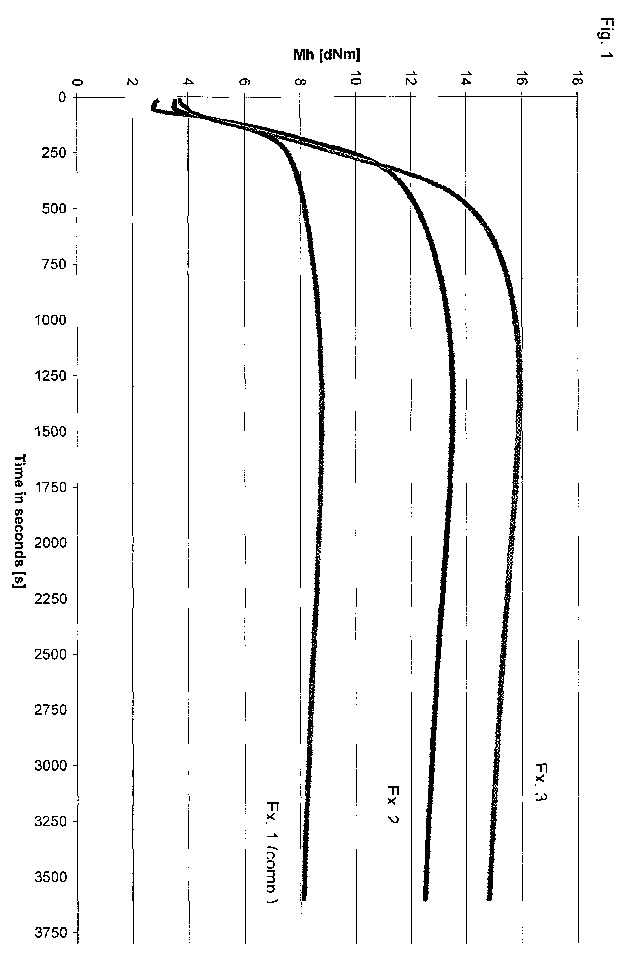

Fig 1. shows for the compounds of examples 1 - 3 the torque (MH) in dN.m for the first hour of curing at 1 °arc and 170 °C.

### Description of the Invention

As used throughout this specification, the term "nitrile polymer" or XNBR is intended to have a broad meaning and is meant to encompass a copolymer having repeating units derived from at least one conjugated diene, at least one alpha-beta-unsaturated nitrile, at least one monomer having a carboxylic group and optionally one or more further copolymerizable monomers.

The conjugated diene may be any known conjugated diene, in particular a C₄-C₆ conjugated diene. Preferred conjugated dienes are butadiene, isoprene, piperylene, 2,3-dimethyl butadiene and mixtures thereof. Even more preferred C₄-C₆ conjugated dienes are butadiene, isoprene and mixtures thereof. The most preferred C₄-C₆ conjugated diene is butadiene.

The alpha-beta-unsaturated nitrile may be any known alpha-beta-unsaturated nitrile, in particular a C₃-C₅ alpha-beta-unsaturated nitrile. Preferred C₃-C₅ alpha-beta-unsaturated nitriles are acrylonitrile, methacrylonitrile, ethacrylonitrile and mixtures thereof. The most preferred C₃-C₅ alpha-beta-unsaturated nitrile is acrylonitrile.

The monomer having at least one carboxylic group may be any known monomer having at least one carboxylic group being copolymerizable with the nitrile and the diene.

Preferred monomers having at least one carboxylic group are unsaturated carboxylic acids. Non-limiting examples of suitable unsaturated carboxylic acids are fumaric acid, maleic acid, acrylic acid, methacrylic acid and mixtures thereof. Other preferred monomers are unsaturated mono- or di-carboxylic acids or derivatives thereof (e.g., esters, amides and the like) including mixtures thereof. Preferably, the copolymer comprises in the range of from 40 to 85 weight percent of repeating units derived from one or more conjugated dienes, in the range of from 15 to 60 weight percent of repeating units derived from one or more unsaturated nitriles and in the range of from 0.1 to 15 weight percent of repeating units derived from one or more monomers having at least one carboxylic group. More preferably, the copolymer comprises in the of from 55 to 75 weight percent of repeating units derived from one or more conjugated dienes, in the range of from 25 to 40 weight percent of repeating units derived from one or more unsaturated nitriles and in the range of from 1 to 7 weight percent of repeating units derived from one or more monomers having at least one carboxylic group.

Optionally, the copolymer may further comprise repeating units derived from one or more copolymerizable monomers, such as such as alkylacrylate, styrene. Repeating units derived from one or more copolymerizable monomers will replace either the nitrile or the diene portion of the nitrile rubber and it will be apparent to the skilled in the art that the above mentioned figures will have to be adjusted to result in 100 weight percent.

Hydrogenated in this invention is preferably understood by more than 50 % of the residual double bonds (RDB) present in the starting nitrile polymer/NBR being hydrogenated, preferably more than 90 % of the RDB are hydrogenated, more preferably more than 95 % of the RDB are hydrogenated and most preferably more than 99 % of the RDB are hydrogenated.

The present invention is not restricted to a special process for preparing the hydrogenated carboxylated NBR. However, the HXNBR preferred in this the invention is readily available as disclosed in WO-01/77185-A1. For jurisdictions allowing for this procedure, WO-01/77185-A1 is incorporated herein by reference.

The XNBR as well as the HXNBR which forms a preferred component of the polymer composite of the invention can be characterized by standard techniques known in the art. For example, the molecular weight distribution of the polymer was determined by gel permeation chromatography (GPC) using a Waters 2690 Separation Module and a Waters 410 Differential Refractometer running Waters Millennium software version 3.05.01. Samples were dissolved in tetrahydrofuran (THF) stabilized with 0.025% BHT. The columns used for the determination were three sequential mixed-B gel columns from Polymer Labs. Reference Standards used were polystyrene standards from American Polymer Standards Corp.

The inventive polymer composite further comprises at least one halogenated butyl rubber. The term "halobutyl rubber(s)" as used herein refers to a chlorinated and/or brominated butyl elastomer. Brominated butyl elastomers are preferred, and the invention is illustrated, by way of example, with reference to such bromobutyl elastomers. It should be understood, however, that the invention extends to the use of chlorinated butyl elastomers.

Thus, halobutyl elastomers suitable for use in the practice of this invention include, but are not limited to, brominated butyl elastomers. Such elastomers may be obtained by bromination of butyl rubber (which is a copolymer of isobutylene and a co-monomer that is usually a C₄ to C₆ conjugated diolefin, preferably isoprene). Co-monomers other than conjugated diolefins can be used, however, and mention is made of alkyl-substituted vinyl aromatic co-monomers such as C₁- to C₄-alkyl substituted styrene. An example of such an elastomer which is commercially available is brominated isobutylene methylstyrene copolymer (BIMS) in which the co-monomer is p-methylstyrene.

A brominated butyl elastomer typically contains in the range of from 1 to 3 weight percent of isoprene and in the range of from 97 to 99 weight percent of isobutylene (based upon the hydrocarbon content of the polymer) and in the range of from 1 to 4 weight percent bromine (based upon the bromobutyl polymer). A typical bromobutyl polymer has a molecular weight, expressed as the Mooney viscosity (ML 1 + 8 at 125°C), of in the range of from 28 to 55.

For use in the present invention the brominated butyl elastomer preferably contains in the range of from 1 to 5 weight percent of a diolefin, such as isoprene and from 95 to 99 weight percent of an isoolefin, such isobutylene (based upon the hydrocarbon content of the polymer) and from 0.5 to 2.5 weight percent, preferably from 0.75 to 2.3 weight percent, of bromine (based upon the brominated butyl polymer).

A stabilizer may be added to the brominated butyl elastomer. Suitable stabilizers include calcium stearate and epoxidized soy bean oil, preferably used in an amount in the range of from 0.5 to 5 parts by weight per 100 parts by weight of the brominated butyl rubber.

Examples of suitable brominated butyl elastomers include Bayer® Bromobutyl 2030, Bayer® Bromobutyl 2040 (BB2040), and Bayer® Bromobutyl X2 commercially available from Bayer Inc. Bayer® BB2040 has a Mooney viscosity (RPML 1+8 @ 125°C according to ASTM D 52-89) of 39 ± 4, a bromine content of 2.0 ± 0.3 wt% and an approximate molecular weight Mw of 500,000 grams per mole.

The composition of the inventive polymer composite will depend on the intended use and by adjusting the content of nitrile rubber and halobutyl, it is possible to tailor the properties of the final compound and the resulting article. However, it is preferred that the inventive polymer composite comprises in the range of from 0.01 to 20 parts by weight per hundred parts by weight of halobutyl rubber of at least one, optionally hydrogenated, carboxylated nitrile rubber polymer, more preferably in the range of from 0.1 to 5 parts.

The inventive polymer composite further optionally comprises at least one filler. The filler may be an active or an inactive filler or a mixture thereof. The filler may be in particular:
- highly dispersed silicas, prepared e.g. by the precipitation of silicate solutions or the flame hydrolysis of silicon halides, with specific surface areas of in the range of from 5 to 1000 m²/g, and with primary particle sizes of in the range of from 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas in the range of from 20 to 400 m²/g and primary particle diameters in the range of from 10 to 400 nm;
- natural silicates, such as kaolin and other naturally occurring silica;
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide;
- carbon blacks; the carbon blacks to be used here are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on polybutadiene, butadiene/styrene copolymers, butadiene/acrylonitrile copolymers and polychloroprene;
or mixtures thereof.

Examples of preferred mineral fillers include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the rubber. For many purposes, the preferred mineral is silica, especially silica made by carbon dioxide precipitation of sodium silicate. Dried amorphous silica particles suitable for use in accordance with the invention may have a mean agglomerate particle size in the range of from 1 to 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover usually has a BET surface area, measured in accordance with DIN (Deutsche Industrie Norm) 66131, of in the range of from 50 and 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. Also suitable are Vulkasil® S and Vulkasil® N, from Bayer AG.

Often, use of carbon black as a filler is advantageous. Usually, carbon black is present in the polymer composite in an amount of in the range of from 20 to 200 parts by weight, preferably 30 to 150 parts by weight, more preferably 40 to 100 parts by weight. Further, it might be advantageous to use a combination of carbon black and mineral filler in the inventive polymer composite. In this combination the ratio of mineral fillers to carbon black is usually in the range of from 0.05 to 20, preferably 0.1 to 10.

The polymer composite may advantageously further comprise other natural or synthetic rubbers such as BR (polybutadiene), ABR (butadiene/acrylic acid-C₁-C₄-alkylester-copolymers), CR (polychloroprene), IR (polyisoprene), SBR (styrene/butadiene-copolymers) with styrene contents in the range of 1 to 60 wt%, NBR (butadiene/acrylonitrile-copolymers with acrylonitrile contents of 5 to 60 wt%, HNBR with a Mooney viscosity (ML 1+4 @ 100°C according to ASTM test D1646) of at least 30 (partially or totally hydrogenated NBR-rubber), EPDM (ethylene/propylene/diene-copolymers), FKM (fluoropolymers or fluororubbers), and mixtures of the given polymers. Careful blending with conventional HNBR often reduces cost of the polymer composite without sacrificing the processability. The amount of conventional HNBR and/or other natural or synthetic rubbers will depend on the process condition to be applied during manufacture of shaped articles and is readily available by few preliminary experiments.

The polymer composite furthermore optionally comprises one or more cross-linking agents or curing systems. The invention is not limited to a special curing system, however, peroxide curing system are preferred. Furthermore, the invention is not limited to a special peroxide curing system. For example, inorganic or organic peroxides are suitable. Preferred are organic peroxides such as dialkylperoxides, ketalperoxides, aralkylperoxides, peroxide ethers, peroxide esters, such as di-tert.-butylperoxide, bis-(tert.-butylperoxyisopropyl)-benzene, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate. Usually the amount of peroxide in the polymer composite is in the range of from 1 to 10 phr (= per hundred rubber), preferably from 4 to 8 phr. Subsequent curing is usually performed at a temperature in the range of from 100 to 200 °C, preferably 130 to 180 °C. Peroxides might be applied advantageously in a polymer-bound form. Suitable systems are commercially available, such as Polydispersion T(VC) D-40 P from Rhein Chemie Rheinau GmbH, D (= polymerbound di-tert.-butylperoxy-isopropylbenzene). Cross-linking may also be effected by radiation such as alpha-, beta-, or gamma-radiation.

The rubber composition according to the invention can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts, which depend inter alia on the intended use. Conventional amounts are e.g. from 0.1 to 50 wt.%, based on rubber. Preferably the composition comprises in the range of 0.1 to 20 phr of an organic fatty acid as an auxiliary product, preferably a unsaturated fatty acid having one, two or more carbon double bonds in the molecule which more preferably includes 10% by weight or more of a conjugated diene acid having at least one conjugated carbon-carbon double bond in its molecule. Preferably those fatty acids have in the range of from 8-22 carbon atoms, more preferably 12-18. Examples include stearic acid, palmitic acid and oleic acid and their calcium-, zinc-, magnesium-, potassium- and ammonium salts. Preferably the composition comprises in the range of 5 to 50 phr of an acrylate as an auxiliary product. Suitable acrylates are known from EP-A1-0 319 320, in particular p. 3, l. 16 to 35, from US-5 208 294, in particular Col. 2, l. 25 to 40, and from US-4 983 678, in particular Col. 2, l. 45 to 62. Particular reference is made to zinc acrylate, zinc diacrylate or zinc dimethacrylate or a liquid acrylate, such as trimethylolpropanetrimethacrylate (TRIM), butanedioldimethacrylate (BDMA) and ethylenglycoldimethacrylate (EDMA). It might be advantageous to use a combination of different acrylates and/or metal salts thereof. Of particular advantage is often to use metal acrylates in combination with a Scorch-retarder such as sterically hindered phenols (e.g. methyl-substituted aminoalkylphenols, in particular 2,6-di-tert.-butyl-4-dimethylaminomethylphenol).

Still another aspect, the present invention relates to a process for preparing said polymer composite comprising at least one, optionally hydrogenated, carboxylated nitrile rubber polymer, and at least halogenated butyl rubber wherein said at least one, optionally hydrogenated, carboxylated nitrile rubber polymer and at least halogenated butyl rubber are mixed.

The ingredients of the final polymer composite are mixed together, preferably at an elevated temperature that may range from 25 °C to 200 °C. Normally the mixing time does not exceed one hour and a time in the range from 2 to 30 minutes is usually adequate. The mixing is suitably carried out in an internal mixer such as a Banbury mixer, or a Haake or Brabender miniature internal mixer. A two roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted pre-crosslinking (= scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization). During curing/vulcanization, the desired formation of cross-links between halobutyl, XNBR/HXNBR takes place and thus increases the cross-linking density of the compound.

Therefore, the present invention relates to a method of increasing the cross-linking density of a halogenated butyl rubber by admixing said halogenated butyl rubber with at least one, optionally hydrogenated, carboxylated nitrile rubber polymer, optionally at least on cross-linking agent, and optionally a filler and curing the compound.

The inventive composite composition results in improved cured state of the final part over the comparative examples. This results in an improvement in the physical properties of the final part as measured by the modulus at various elongation and the compound hardness.

Furthermore, the invention provides a shaped article comprising said inventive polymer composite comprising at least one carboxylated nitrile rubber polymer, that is optionally hydrogenated, and at least one halogenated butyl rubber. Preferred shaped articles are tires, parts of tires, such as inner-liners, treads and side-walls, seals, adhesives and sealing compounds, coatings, cements and tapes for covering pipes.

### EXAMPLES

### Example 1 - 3

Polymer composites were mixed on an open mill (6x12 inch mill, capacity 1000) with mill set at 30 °C. Then Carbon black, stearic acid and oil were added on the same mill set at 30 °C in a separate mixing step. Then, the curatives and the Vulkacit® DM/C were added on the same mill set at 30 °C in a separate mixing step. The formulations were according to Table 1.

Therban® XT VP KA 8889 is a HXNBR available from Bayer Inc.

Bayer® Bromobutyl 2030 is a bromobutyl available from Bayer Inc.

Carbon black N 660 Sterling-V available from Cabot Tire Blacks

Stearic acid is available from C.P. Hall.

Sunpar® 2280 is a paraffinic oil produced by Sun Oil.

Struktol® ZP 1014 is a preparation of Zinc Peroxide available from Struktol

Vulkacit® DM/C is a dibenzothiazyl-disulfide available from Bayer AG

**Table 1**

| **Compounding Recipe** | | | |
|---|---|---|---|
| **Example** | **1** **(comp.)** | **2** | **3** |
| Therban® XT VP KA 8889 | 0 | 4 | 8 |
| Bayer® Bromobutyl 2030 | 100 | 100 | 100 |
| Carbon black N 660 | 60 | 60 | 60 |
| Stearic acid | 1 | 1 | 1 |
| Sunpar® 2280 | 7 | 7 | 7 |
| Vulkacit® DM/C | 1.3 | 1.3 | 1.3 |

| **Curatives** | | | |
|---|---|---|---|
| Spider Sulfur | 0.5 | 0.5 | 0.5 |
| Struktol® ZP 1014 | 6 | 6 | 6 |

### Polymer Composites Properties

Table 2 shows a summary of the properties of polymer composites of Exp. 1-3. Example 1 is for comparison.

*Compound Mooney Viscosity:* Measurements were conducted at 100 °C using a large rotor.

*Cure rheometry*: ASTM D 52-89 MDR2000E Rheometer at 1° arc and 1.7 Hz

*Compound Mooney* Scorch. Measurements were conducted at 135 °C using a large rotor.

*Stress-strain.* Samples were prepared by curing a macro sheet at 170 °C for tc90+5 minutes, after which the appropriate sample was dyed out. The test was conducted at 23 °C.

| **EXAMPLE** | **1** | **2** | **3** |
|---|---|---|---|
| **COMPOUND MOONEY VISCOSITY** | | | |
| ML 1+4 @ 100°C | 63.7 | 67.5 | 67.8 |
| Time to Decay 80% (min) | 0.09 | 0.11 | 0.11 |
| Slope (IgM/Igs) | -0.5341 | -0.5011 | -0.4876 |
| Intercept (MU) | 30.557 | 32.9044 | 32.9654 |
| Area Under Curve | 777.3 | 949.7 | 1002.4 |
| | | | |

| **COMPOUND MOONEY SCORCH** | | | |
|---|---|---|---|
| t5 @ 135°C (min) | 10.9 | 12.2 | 14.2 |
| | | | |

| **MDR CURE CHARACTERISTICS 1.7Hz; 1°arc; 170°C; 60'.** | | | |
|---|---|---|---|
| MH (dN.m) | 8.78 | 13.52 | 15.92 |
| ML (dN.m) | 2.76 | 3.50 | 3.71 |
| Delta MH-ML (dN.m) | 6.02 | 10.02 | 12.21 |
| ts 1 (min) | 1.32 | 1.50 | 1.62 |
| ts 2 (min) | 1.62 | 1.92 | 2.16 |
| t' 10 (min) | 1.21 | 1.50 | 1.74 |
| t' 25 (min) | 1.45 | 2.08 | 2.69 |
| t' 50 (min) | 2.11 | 3.40 | 4.50 |
| t' 90 (min) | 8.45 | 9.62 | 9.69 |
| t' 95 (min) | 12.53 | 12.78 | 12.24 |
| Delta t'50 - t'10 (min) | 0.90 | 1.90 | 2.76 |
| | | | |
| **STRESS STRAIN (DUMBELLS)** | | | |
| Cure Time at 170°C (min) | 15 | 17 | 17 |
| Stress @ 10 (MPa) | 0.56 | 1.27 | 1.60 |
| Stress @ 25 (MPa) | 0.71 | 1.62 | 2.18 |
| Stress @ 50 (MPa) | 0.86 | 2.01 | 2.81 |
| Stress @ 100 (MPa) | 1.29 | 2.85 | 3.84 |
| Stress @ 200 (MPa) | 2.92 | 5.21 | 6.09 |
| Stress @ 300 (MPa) | 5.09 | 7.92 | 8.60 |
| Ultimate Tensile (MPa) | 10.55 | 10.94 | 10.18 |
| Ultimate Elongation (%) | 671 | 443 | 370 |
| Hardness Shore A2 (pts.) | 44 | 63 | 68 |

The Delta MH-ML gives an indication of the crosslinking density. It is clear from examples 2-3 (Table 2 and Figure 1) that the addition of small ammounts of Carboxylated hydrogenated nitrile butadiene rubber to a bromo butyl formulation results in significant improvements in the cure state of the composite. This leads to compound with improved hardness and increased modulus at a set elongation.

## Claims

1. A polymer composite comprising at least one, optionally hydrogenated, carboxylated nitrile rubber polymer, and at least halogenated butyl rubber.

2. A composite according to claim 1 wherein the carboxylated nitrile rubber polymer is a hydrogenated carboxylated nitrile rubber.

3. A composite according to claim 1 or 2 wherein the halogenated butyl rubber is a brominated butyl rubber.

4. A composite according to any of claims 1-3 wherein the carboxylated nitrile rubber is a statistical copolymer.

5. A composite according to any of claims 1-4 wherein the polymer composite further comprises at least one cross-linking agent.

6. A composite according to any of claims 1-5 wherein the polymer composite further comprises at least one filler.

7. A process for preparing a polymer composite according to any of claims 1-6 wherein at least one, optionally hydrogenated, carboxylated nitrile rubber polymer, at least one halogenated butyl rubber, optionally at least one filler and optionally at least one cross-linking agent are mixed.

8. A shaped article comprising at least one, optionally hydrogenated, carboxylated nitrile rubber polymer, and at least halogenated butyl rubber.

9. A shaped article according to claim 8 in the form of a tire or a tire component.

10. In a method of increasing the cross-linking density of a halogenated butyl rubber by admixing said halogenated butyl rubber with at least one, optionally hydrogenated, carboxylated nitrile rubber polymer, optionally at least on cross-linking agent, and optionally a filler and curing the compound.

11. In a method according to claim 9, wherein the carboxylated nitrile rubber is a statistical copolymer.

12. In a method according to claim 9 or 10, wherein the halogenated butyl rubber is a brominated butyl rubber.
